# EUROPÄISCHE PATENTSCHRIFT

(11) **EP 1 731 270 B1**
(45) Veröffentlichungstag und Bekanntmachung des Hinweises auf die Patenterteilung: **01.07.2009**
(21) Anmeldenummer: 06005016.8
(22) Anmeldetag: 11.03.2006
(51) Int. Cl.: B25C 5/11, B25C 5/16, B25C 7/00, F24D 3/14

(54) **Vorrichtung zum Einstossen von Haltenadeln**
Fastening device for retaining nails
Dispositif pour fixer des aiguilles de retenue

(30) Priorität: 07.06.2005 DE 202005008988 U
(43) Veröffentlichungstag der Anmeldung: 13.12.2006
(73) Patentinhaber: Winkler, Wolfram, Dr., 88662 Überlingen (DE)
(72) Erfinder: Schöpf, Saskia, 88662 Überlingen (DE)
(74) Vertreter: Rohmann, Michael

(56) Entgegenhaltungen:
- EP-A- 1 207 354
- EP-A- 1 248 047
- EP-A- 1 331 067
- DE-U1- 8 621 704
- DE-U1- 8 807 934
- GB-A- 2 097 313
- US-A- 4 928 867
- US-A1- 2004 011 845

## Beschreibung

Die Erfindung betrifft einen Befestigungssystem mit einer Vorrichtung zum Einstoßen von Haltenadeln in einen Untergrund, - mit Haltenadelmagazin, Abdrückstempel sowie Stempelgehäuse mit Führungsschacht und Ausstoßöffnung, wobei durch Betätigung des im Stempelgehäuse geführten Abdrückstempels eine im Führungsschacht aufgenommene Haltenadel aus der Ausstoßöffnung in den Untergrund einstoßbar ist, wobei ferner im Bereich der Ausstoßöffnung ein Adapter angeschlossen ist oder anschließbar ist, und mit zumindest einer U-förmigen Rohrbefestigungsschiene.

Vorrichtungen der vorstehend beschriebenen Art sind grundsätzlich bekannt und zwar insbesondere zur Befestigung von U-förmigen Haltern für Heizrohre von Fußbodenheizungen (DE 3 129 818 C2). Die Vorrichtung wird auf ein bereits ausgelegtes Heizrohr aufgesetzt und überbrückt dann das Heizrohr bzw. das Heizrohr wird in einer entsprechenden Ausnehmung am unteren Ende der Vorrichtung aufgenommen. Durch Betätigung des im Stempelgehäuse geführten Abdrückstempels wird ein U-förmiger Halter in den Untergrund bzw. in eine Wärmeisolierung eingestoßen. Diese Vorrichtungen haben sich zur Befestigung von Heizungsrohren bewährt.

Aus der Praxis und durch die EP 1 207 354 A2 sind außerdem Rohrbefestigungsschienen zur Befestigung von Heizungsrohren bekannt. Dabei handelt es sich bei den aus der Praxis bekannten Rohrbefestigungsschienen insbesondere um Kunststoffschienen, die beispielsweise aus PVC bestehen. Diese Rohrbefestigungsschienen weisen einen U-förmigen Querschnitt auf. In den U-Schenkein dieser Rohrbefestigungsschienen sind Aufnahmeöffnungen bzw. Befestigungsaussparungen für die formschlüssige Aufnahme von Fußbodenheizungsrohren ausgebildet. Die Fußbodenheizungsrohre werden dabei normalerweise in Form von Heizschlangen verlegt, wobei sie in bestimmten Abständen in den Aufnahmeöffnungen der Rohrbefestigungsschienen fixiert sind. Insbesondere aufgrund der schlangenartigen Verlegung der Fußbodenheizungsrohre wirken auf die Rohrbefestigungsschienen nicht unerhebliche Kräfte ein. Deshalb ist es wichtig, dass die Rohrbefestigungsschienen sicher am Untergrund fixiert werden.

Im Rahmen der DE 88 07 934 U1 wird eine Vorrichtung zum Eindrücken von U-förmigen Rohrhaltern beschrieben. Diese verfügt am unteren Ende eines Führungsteils über ein aus Kunststoff bestehendes Auflageteil. An der Unterseite des Auflageteils ist eine rinnenförmige Vertiefung mit kreisbogenförmigem Querschnitt vorgesehen. Der Krümmungsradius einer teilzylindrischen Begrenzungsfläche der Vertiefung ist mindestens so groß wie der Außenradius des dicksten zu verarbeitenden Heizrohrs gewählt.

Im Rahmen der EP 1 331 067 A2 wird schließlich ein System zur Befestigung von rohrförmigen Gegenständen beschrieben. Dieses besteht aus einem Setzgerät und Befestigungsklammem. Die einzelnen Klammern verfügen über eine Verdrehsicherung und sind durch Scharniere zu einem Magazin zusammengefasst.

Der Erfindung liegt das technische Problem zugrunde, einen Befestigungssystem anzugeben, mit der Rohrbefestigungsschienen auf einfache und funktionssichere Weise an einem Untergrund fixiert werden können.

Zur Lösung dieses technischen Problems ist Gegenstand der Erfindung ein Befestigungssystem gemäß Anspruch 1 dargestellt.

Zur Fixierung der Rohrbefestigungsschiene wird die Vorrichtung mit dem (bereits) angeschlossenen Adapter an die Schiene herangeführt und mit dem Adapter formschlüssig in die Schiene eingepasst. Dass der Adapter im Bereich der Ausstoßöffnung an die Vorrichtung angeschlossen ist, meint im Rahmen der Erfindung aber auch, dass der Adapter lediglich beim Fixierungsvorgang an die Vorrichtung angeschlossen ist.

Mit anderen Worten muss der Adapter nicht fest an die Vorrichtung angeschlossen sein. Der Adapter kann gemäß dieser Ausführungsform als loses bzw. separates Bauteil zunächst formschlüssig in die Rohrbefestigungsschiene eingepasst werden und dann kann die Vorrichtung gleichsam auf den Adapter aufgesetzt werden bzw. in den Adapter eingesetzt werden und anschließend wird der Fixierungsvorgang durchgeführt.

Das erfindungsgemäße Befestigungssystem dient also zur Fixierung von Rohrbefestigungsschienen, insbesondere für Heizungsrohre, mit Haltenadeln. Eine Rohrbefestigungsschiene ist im Querschnitt U-förmig ausgebildet und weist somit zwei U-Schenkel auf, die durch einen U-Steg verbunden werden. Beim Fixierungsvorgang liegt der U-Steg normalerweise auf dem Untergrund auf. Bei dem Untergrund handelt es sich in der Regel um eine wärmeisolierende Schicht bzw. um wärmeisolierende Platten, beispielsweise Styroporplatten. Es liegt im Rahmen der Erfindung, dass die Haltenadeln beim Fixieren Öffnungen in den Rohrbefestigungsschienen durchgreifen und im Untergrund verankert werden. Vor einem Einstoßvorgang bzw. vor dem Betätigen des Abdrückstempels ist zweckmäßigerweise lediglich eine einzige Haltenadel im Führungsschacht der Vorrichtung aufgenommen. Beim Betätigen des Abdrückstempels wird diese Haltenadel erfasst und durch die Ausstoßöffnung ausgestoßen bzw. in den Untergrund eingestoßen.

Es liegt fernerhin im Rahmen der Erfindung, dass das Haltenadelmagazin und der Führungsschacht der Vorrichtung zur Aufnahme von U-förmigen Haltenadeln ausgelegt sind. Eine U-förmige Haltenadel zur Fixierung der Rohrbefestigungsschienen weist zweckmäßigerweise zwei parallele bzw. im Wesentlichen parallele Nadelschenkel auf, die durch einen Nadelsteg miteinander verbunden sind. Zur effektiven Verankerung im Untergrund sind die beiden Nadelschenkel an ihren Enden zweckmäßigerweise spitz ausgebildet und sind an ihren Enden weiterhin vorzugsweise mit Widerhaken ausgerüstet, mit denen eine wirksame Verankerung im Untergrund möglich ist. Das Haltenadelmagazin der erfindungsgemäßen Vorrichtung weist im Übrigen bevorzugt zumindest eine Magazinstange auf, auf der die Haltenadeln hintereinander magaziniert sind. Bei der Magazinstange handelt es sich zweckmäßigerweise um eine in Fixierungsstellung der Vorrichtung vertikale Magazinstange bzw. im Wesentlichen vertikale Magazinstange, die in ihrem unteren Bereich zum Stempelgehäuse hin gebogen bzw. gekrümmt ausgebildet ist. Die Haltenadeln rutschen vorzugsweise unter Einwirkung der Schwerkraft an der Magazinstange entlang nacheinander in das Stempelgehäuse bzw. in den Führungsschacht.

Nach sehr bevorzugter Ausführungsform der Erfindung greift der untere Teil des Stempelgehäuses formschlüssig in den Adapter ein. Es liegt im Rahmen der Erfindung, dass der untere Teil des Stempelgehäuses den Adapter formschlüssig durchgreifen kann. Die Ausstoßöffnung ist dann am unteren Ende des Adapters angeordnet. Gemäß dieser Ausführungsform ummantelt der Adapter gleichsam den unteren Teil des Stempelgehäuses. Nach einer bevorzugten Ausführungsform ist der Adapter bereits vor dem Fixierungsvorgang an die Vorrichtung angeschlossen. Gemäß einer anderen Ausführungsform kann der Adapter aber auch als separates loses Bauteil formschlüssig in die Rohrbefestigungsschiene eingepasst werden und anschließend kann das Stempelgehäuse formschlüssig in den Adapter eingeführt werden und anschließend der Fixierungsvorgang durchgeführt werden.

Eine bevorzugte Ausführungsform der Erfindung ist dadurch gekennzeichnet, dass der Adapter mit der Maßgabe ausgebildet ist, dass zumindest ein Teil des Adapters formschlüssig zwischen den beiden U-Schenkeln der U-förmigen Rohrbefestigungsschiene einpassbar ist. Zweckmäßigerweise ist der Adapter mit einem unteren Teil formschlüssig zwischen den beiden U-Schenkeln der U-förmigen Rohrbefestigungsschiene einpassbar. Der Adapter bzw. der untere Teil des Adapters stützt sich dabei an den gegenüberliegenden Innenseiten der U-Schenkel der Rohrbefestigungsschiene ab, so dass eine unerwünschte Querbewegung des Adapters bzw. der Vorrichtung relativ zur Rohrbefestigungsschiene vermieden werden kann.

Nach einer bevorzugten Ausführungsform der Erfindung weist der Adapter zumindest einen Fortsatz auf, der in eine Befestigungsaussparung in einem U-Schenkel der U-förmigen Rohrbefestigungsschiene ― vorzugsweise formschlüssig ― einpassbar ist. Mit dem Begriff Befestigungsaussparungen sind hier die eingangs bereits genannten Aufnahmeöffnungen in den U-Schenkeln der U-förmigen Rohrbefestigungsschiene gemeint, die zur Aufnahme der Rohre, insbesondere Fußbodenheizungsrohre dienen. Zweckmäßigerweise weist der Adapter zumindest zwei Fortsätze auf, die in jeweils eine Befestigungsaussparung in den gegenüberliegenden U-Schenkeln der Rohrbefestigungsschiene - vorzugsweise formschlüssig ― einpassbar sind.

Nach einer Ausführungsform der Erfindung ist der Adapter mit der Maßgabe eingerichtet, dass er zumindest mit seinem unteren Teil zwischen den beiden U-Schenkeln der U-förmigen Rohrbefestigungsschiene einpassbar ist und dass er zumindest einen Abschnitt aufweist, der in diesem eingepassten Zustand einen U-Schenkel der Rohrbefestigungsschiene übergreift bzw. hintergreift. Bei dieser Ausführungsform ist es nicht zwingend notwendig, dass der Adapter formschlüssig zwischen den beiden U-Schenkeln einpassbar ist. Hier verhindert nämlich der einen U-Schenkel übergreifende bzw. hintergreifende Abschnitt eine unerwünschte Querbewegung des Adapters bzw. der Vorrichtung relativ zur Längsrichtung der Rohrbefestigungsschiene. Vorzugsweise weist der Adapter zwei Abschnitte auf, die in dem eingepassten Zustand des Adapters jeweils einen der beiden gegenüberliegenden U-Schenkel der Rohrbefestigungsschiene übergreifen bzw. hintergreifen. Ein solcher Abschnitt ist vorzugsweise an einem Fortsatz des Adapters angeschlossen, der in eine Befestigungsaussparung in einem U-Schenkel der Rohrbefestigungsschiene einpassbar ist. Nach einer Ausführungsform weist der Adapter zumindest zwei solcher Fortsätze auf, an denen jeweils ein Abschnitt angeschlossen ist, der in dem eingepassten Zustand des Adapters jeweils einen dieser U-Schenkel übergreift bzw. hintergreift. - Durch das erfindungsgemäße formschlüssige Eingreifen des Adapters in die Rohrbefestigungsschiene wird erreicht, dass die Fixierungsöffnungen in der Schiene problemlos von einer Haltenadel getroffen werden können, ohne dass vorher ein aufwendiges Suchen der Öffnungen erforderlich ist.

Nach sehr bevorzugter Ausführungsform der Erfindung ist der Adapter der Vorrichtung des Systems auswechselbar. Auf diese Weise ist die Vorrichtung auf einfache Weise an verschiedene Arten bzw. Typen von Rohrbefestigungsschienen anpassbar. Der Adapter kann bei dieser Ausführungsform über eine feste Verbindung an die Vorrichtung angeschlossen sein, die zum Austausch bzw. zum Auswechseln des Adapters gelöst werden kann.

Die Erfindung betrifft weiterhin ein Befestigungssystem mit einer Vorrichtung, zum Einstoßen von Haltenadeln mit zumindest einer U-förmigen Rohrbefestigungsschiene und mit zumindest einer U-förmigen Haltenadel, wobei das Befestigungssystem dadurch gekennzeichnet ist, dass die Rohrbefestigungsschiene zumindest zwei benachbarte Fixierungsöffnungen aufweist, deren gegenseitiger Abstand an den Abstand der beiden Nadelschenkel der U-förmigen Haltenadel angepasst ist, so dass die beiden Nadelschenkel die Fixierungsöffnungen nach einem Fixierungsvorgang durchgreifen. Der Nadelsteg der U-förmigen Haltenadel übergreift nach einem solchen Fixierungsvorgang den zwischen den beiden Fixierungsöffnungen vorhandenen Teil des U-Steges der U-förmigen Rohrbefestigungsschiene. Auf diese Weise wird die Rohrbefestigungsschiene effektiv an dem Untergrund fixiert.

Der Erfindung liegt die Erkenntnis zugrunde, dass mit dem erfindungsgemäßen System, die Vorrichtung zum Einstoßen von Haltenadeln bzw. mit dem daran angeschlossenen Adapter eine sehr gezielte und präzise Fixierung von Rohrbefestigungsschienen an einem Untergrund möglich ist. Durch die erfindungsgemäße Ausgestaltung des Befestigungssystems können insbesondere die Fixierungsöffnungen in einer Rohrbefestigungsschiene gezielt und problemlos von den Haltenadeln getroffen werden, ohne dass vorher ein aufwendiges Suchen der Öffnungen notwendig ist. Außerdem können diese Rohrbefestigungsschienen mit der Vorrichtung effektiv und langfristig funktionssicher an dem Untergrund befestigt werden. Nichtsdestoweniger zeichnet sich das System mit der Vorrichtung bzw. der angeschlossene Adapter durch Einfachheit aus und es ist eine problemlose und wenig kraftaufwendige Handhabung des Befestigungssystems möglich. Hervorzuheben ist auch, dass das erfindungsgemäße Befestigungssystems von einer Bedienungsperson in aufrechter Haltung bzw. in stehender Haltung bedient werden kann, in dem ein an den Abdrückstempel angeschlossener Handgriff heruntergedrückt wird. Dadurch wird eine sehr bequeme Handhabung der Vorrichtung erreicht.

Nachfolgend wird die Erfindung anhand einer lediglich ein Ausführungsbeispiel darstellenden Zeichnung näher erläutert. Es zeigen in schematischer Darstellung:
- Fig. 1: eine perspektivische Ansicht des erfindungsgemäßen Befestigungssystems
- Fig. 2: den Gegenstand gemäß Fig. 1 in einer Explosionsdarstellung,
- Fig. 3 a-d: perspektivische Ansichten eines erfindungsgemäßen Befestigungssystems mit einem Adapter, eingepasst in eine Rohrbefestigungsschiene und
- Fig. 4: eine bereits fixierte Rohrbefestigungsschiene im Schnitt.

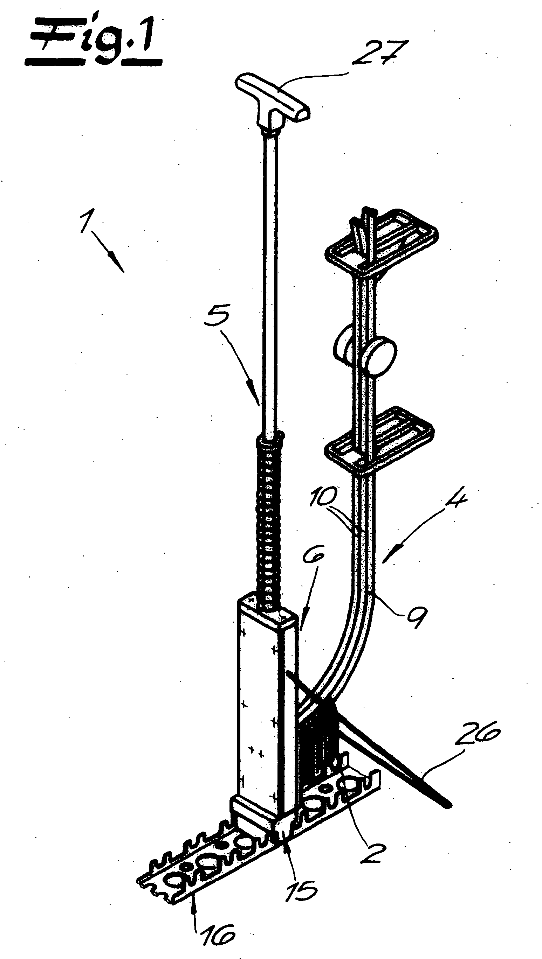

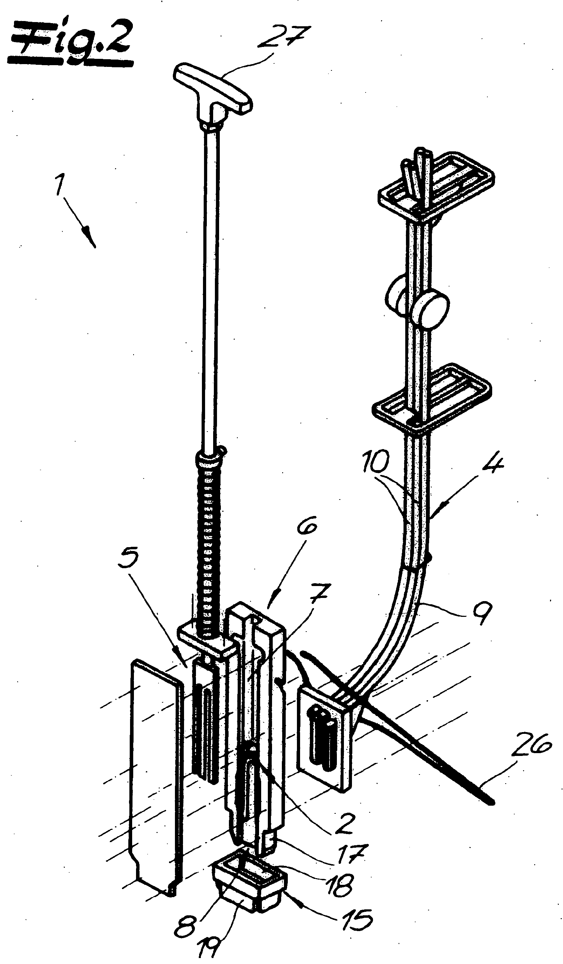

Die Figuren zeigen eine Vorrichtung 1 zum Einstoßen von Haltenadeln 2 in einen Untergrund 3. Bei dem Untergrund 3 mag es sich im Ausführungsbeispiel im wärmeisolierende Platten, insbesondere im Styroporplatten handeln. Die Vorrichtung weist ein Haltenadelmagazin 4 zur Aufnahme der Haltenadeln 2 auf und einen Abdrückstempel 5 sowie ein Stempelgehäuse 6 mit Führungsschacht 7 und Ausstoßöffnung 8. Durch Betätigung des im Stempeigehäuses 6 geführten Abdruckstempels 5 wird eine im Führungsschacht 7 aufgenommene Haltenadel 2 aus der Ausstoßöffnung 8 in den Untergrund 3 eingestoßen. Das Haltenadelmagazin 4 besteht vorzugsweise um im Ausführungsbeispiel (Fig. 1 und 2) aus unteren Magazinstangen 9 und oberen Magazinstangen 10. Der Nadelsteg 11 der Haltenadeln 2 wird zwischen den unteren Magazinstangen 9 und den oberen Magazinstangen 10 aufgenommen und die Haltenadeln 2 rutschen unter ihrem Eigengewicht auf den unteren Magazinstangen 9 zum Stempelgehäuse 6 bzw. zum Führungsschacht 7.

Es liegt im Rahmen der Erfindung, dass die Vorrichtung 1 mit der Maßgabe ausgebildet ist, dass eine Bedienungsperson die Vorrichtung 1 in aufrechter Haltung bzw. in stehender Haltung bedienen kann. Vorzugsweise weist dazu der Abdrückstempel 5 eine entsprechende Länge auf und zweckmäßigerweise ist am oberen Ende des Abdrückstempels 5 ein Handgriff 27 angeschlossen (Fig. 1), der von einer stehenden Bedienungsperson bequem erfassbar ist. Mit Hilfe des Handgriffes 27 kann dann der Abdrückstempel 5 in entsprechender Weise heruntergedrückt werden, damit eine Haltenadel 2 aus der Ausstoßöffnung 8 in den Untergrund 3 eingestoßen werden kann.

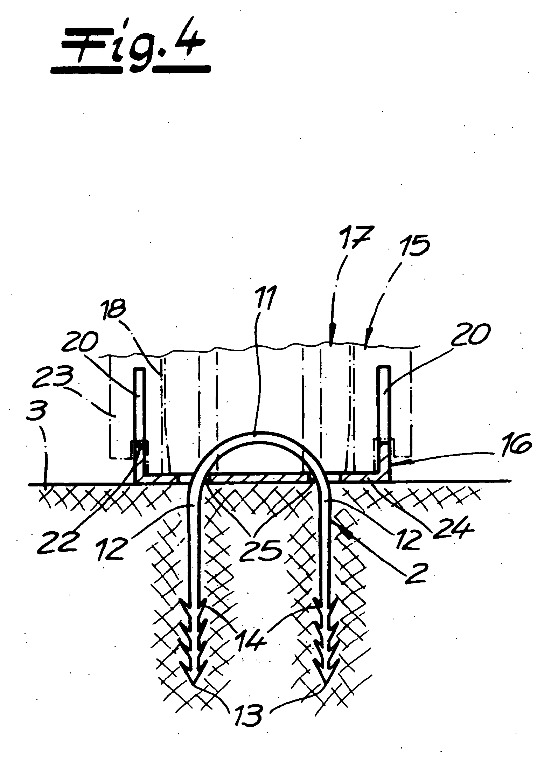

Wie oben bereits ausgeführt sind die Haltenadeln 2 zweckmäßigerweise und im Ausführungsbeispiel U-förmig ausgebildet und weisen zwei parallele Nadelschenkel 12 auf, die durch den Nadelsteg 11 miteinander verbunden sind. Die Nadelschenkel 12 weisen vorzugsweise an ihren Enden Spitzen 13 auf sowie Widerhaken 14, so dass sie effektiv in dem Untergrund 3 verankert werden können (siehe insbesondere Fig. 4).

Erfindungsgemäß ist im Bereich der Ausstoßöffnung 8 der Vorrichtung 1 ein Adapter 15 angeschlossen, der mit der Maßgabe ausgebildet ist, dass er formschlüssig in eine mit der Haltenadel 2 bzw. mit Haltenadeln 2 am Untergrund 3 zu fixierende U-förmige Rohrbefestigungsschiene 16 einpassbar ist. Vorzugsweise und im Ausführungsbeispiel greift der untere Teil 17 des Stempelgehäuses 6 formschlüssig in eine Adapteröffnung 18 des Adapters 15 ein. Im Ausführungsbeispiel durchgreift dieser untere Teil 17 gleichsam den Adapter 15, so dass die Ausstoßöffnung 8 des Stempelgehäuses 6 am unteren Ende des Adapters 15 angeordnet ist.

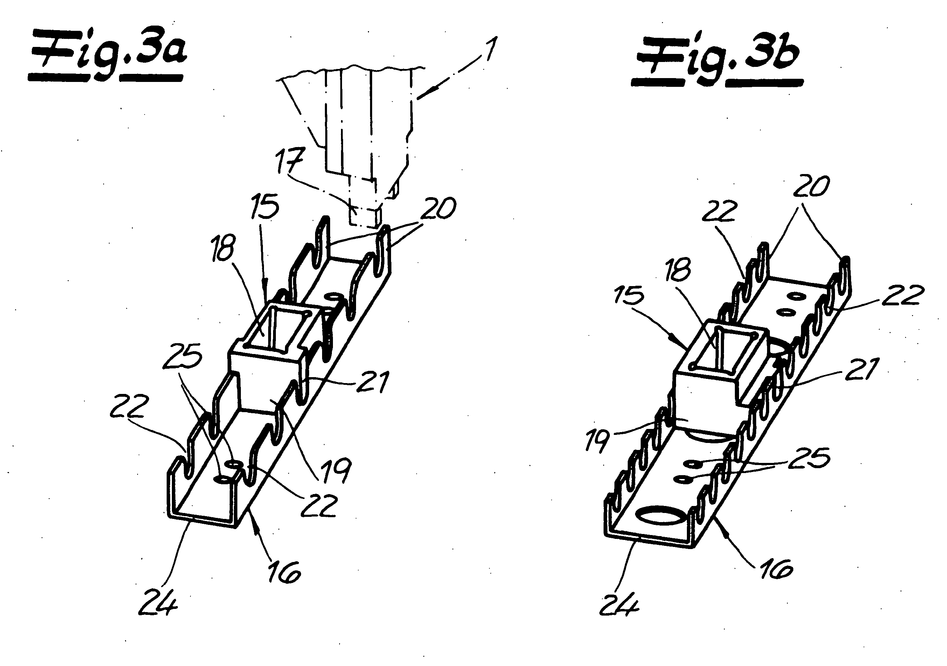

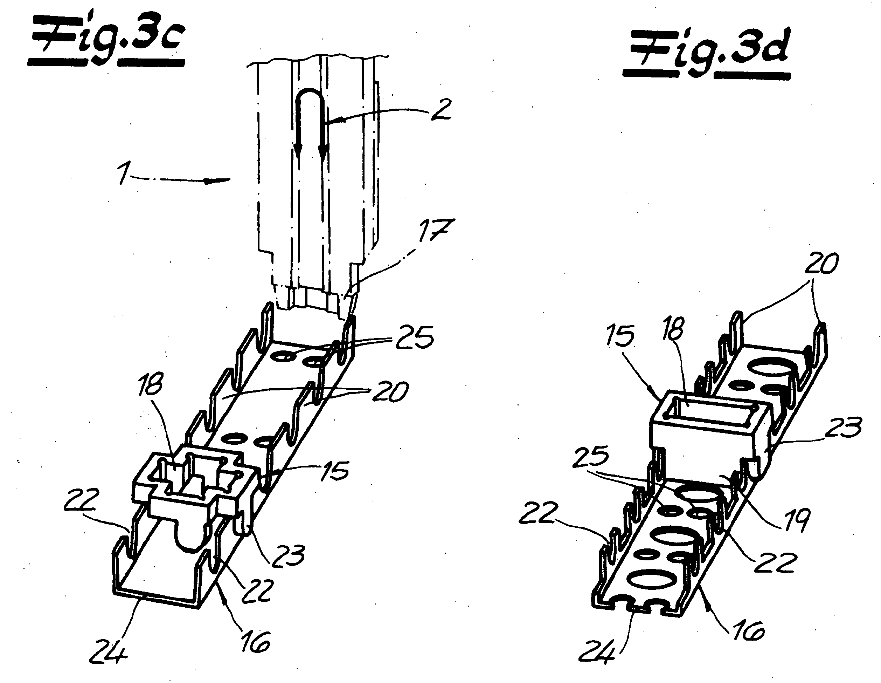

Insbesondere die Fig. 3a, 3b und 3d zeigen eine Ausführungsform der Erfindung, bei der der Adapter 15 mit der Maßgabe ausgebildet ist, dass ein unterer Teil 19 des Adapters 15 formschlüssig zwischen den beiden U-Schenkeln 20 der U-förmigen Rohrbefestigungsschiene 16 einpassbar ist. Der genannte untere Teil 19 des Adapters 15 stützt sich also an den gegenüberliegenden Innenseiten der U-Schenkel 20 ab und auf diese Weise wird eine Querbewegung des Adapters 15 bzw. der Vorrichtung 1 relativ zur Längsrichtung der Rohrbefestigungsschiene 16 vermieden.

In den Ausführungsbeispielen nach den Fig. 3a bis 3d weist der Adapter 15 zwei Fortsätze 21 an gegenüberliegenden Seiten auf, die jeweils in eine Befestigungsaussparung 22 in den U-Schenkeln 20 der U-förmigen Rohrbefestigungsschiene 16 formschlüssig eingepasst sind. Die Befestigungsaussparungen 22 der Rohrbefestigungsschiene 16 dienen zur formschlüssigen Aufnahme von Rohren, insbesondere von Fußbodenheizungsrohren (die in den Figuren nicht dargestellt sind). In den Ausführungsbeispielen 3c und 3d sind an die Fortsätze 21 jeweils Abschnitte 23 angeschlossen, die die Außenseite des jeweiligen U-Schenkels 20 übergreifen. Auch auf diese Weise kann effektiv eine Querbewegung des Adapters bzw. der Vorrichtung 1 relativ zur Längsrichtung der Rohrbefestigungsschiene 16 vermieden werden.

In dem U-Steg 24 einer Rohrbefestigungsschiene 16 sind Fixierungsöffnungen 25 für die U-förmigen Haltenadeln 2 vorgesehen. Dabei sind zwei benachbarte Fixierungsöffnungen 25 den beiden Nadelschenkeln 12 einer U-förmigen Haltenadel 2 zugeordnet. Im fixierten Zustand der Rohrbefestigungsschiene 16 durchgreifen die beiden Nadelschenkel 12 der Haltenadel 2 diese beiden Fixierungsöffnungen 25 und der Nadelsteg 11 übergreift dann den zwischen den beiden Fixierungsöffnungen 25 angeordneten Teil des U-Steges 24 der Rohrbefestigungsschiene 16 (Fig. 4).

Die den Haltenadeln 2 zugeordneten Fixierungsöffnungen 25 können gemäß einer Ausführungsform in einer Reihe in Längsrichtung der Rohrbefestigungsschiene 16 angeordnet sein (Fig. 3a und b). Nach dem Einbringen einer Haltenadel 2 ist hier der Nadelsteg 11 der Haltenadeln 2 in Längsrichtung der Rohrbefestigungsschiene 16 orientiert. Bei diesen Ausführungsformen weist auch die Adapteröffnung 18 des Adapters 15 eine größere Erstreckung in Längsrichtung der Rohrbefestigungsschiene 16 auf und das Stempelgehäuse 6 wird entsprechend formschlüssig in diese Adapteröffnung 18 eingepasst.

Im Ausführungsbeispiel nach den Fig. 3c und d sind jeweils zwei Fixierungsöffnungen 25 quer zur Längsrichtung der Rohrbefestigungsschiene 16 angeordnet. Der Nadelsteg 11 einer eingebrachten Haltenadel 2 ist hier also senkrecht zur Längsrichtung der Rohrebefestigungsschiene 16 orientiert. In diesen Ausführungsbeispielen weist die Adapteröffnung 18 des Adapters 15 eine entsprechende Erstreckung in Querrichtung der Rohrbefestigungsschiene 16 auf. Dabei ist darauf hinzuweisen, dass im Ausführungsbeispiel nach Fig. 3c der Adapter 15 sowohl ein Einbringen des Nadelsteges 11 der Haltenadeln 2 in Längsrichtung als auch quer zur Längsrichtung der Rohrbefestigungsschiene 16 erlaubt. Dementsprechend hat dieser Adapter 15 eine kreuzförmige Adapteröffnung 18 und das Stempelgehäuse 6 kann je nach Orientierung der Fixierungsöffnungen 25 in der Rohrbefestigungsschiene 16 in die Adapteröffnung 18 eingebracht werden.

Das erfindungsgemäße Befestigungssystem weist vorzugsweise und im Ausführungsbeispiel (Fig. 1 und 2) einen Abstützbügel 26 auf, der an das Stempelgehäuse 6 angeschlossen ist und mit dem die Vorrichtung 1 beim Fixierungsvorgang auf dem Untergrund 3 abstützbar ist.

## Patentansprüche

1. Befestigungssystem mit einer Vorrichtung (1) zum Einstoßen von Haltenadeln (2) in einen Untergrund (3) und mit zumindest einer U-förmigen Rohrbefestigungsschiene (16),
wobei die Vorrichtung (1) ein Haltenadelmagazin (4), einen Abdrückstempel (5) sowie ein Stempelgehäuse (6) mit Führungsschacht (7) und Ausstoßöffnung (8) aufweist,
wobei durch Betätigen des im Stempelgehäuse (6) geführten Abdrückstempels (5) eine im Führungsschacht (7) aufgenommene Haltenadel (2) aus der Ausstoßöffnung (8) in den Untergrund (3) einstoßbar ist
und wobei im Bereich der Ausstoßöffnung (8) ein Adapter (15) angeschlossen oder anschließbar ist, der mit der Maßgabe ausgebildet ist, dass er formschlüssig in die mit der Haltenadel (2) am Untergrund (3) zu fixierende U-förmige Rohrbefestigungsschiene (16) einpassbar ist.

2. Befestigungssystem nach Anspruch 1, wobei das Haltenadelmagazin (4) und der Führungsschacht (7) zur Aufnahme von U-förmigen Haltenadeln (2) ausgelegt sind.

3. Befestigungssystem nach einem der Ansprüche 1 oder 2, wobei der untere Teil (17) des Stempelgehäuses (6) formschlüssig in den Adapter (15) eingreift.

4. Befestigungssystem nach einem der Ansprüche 1 bis 2, wobei der Adapter' (15) mit der Maßgabe ausgebildet ist, dass zumindest ein Teil des Adapters (15) formschlüssig zwischen den beiden U-Schenkeln (20) der U-förmigen Rohrbefestigungsschiene (16) einpassbar ist.

5. Befestigungssystem nach einem der Ansprüche 1 bis 4, wobei der Adapter (15) zumindest einen Fortsatz (21) aufweist, der in eine Befestigungsaussparung (22) in einem U-Schenkel (20) der U-förmigen Rohrbefestigungsschiene (16) einpassbar ist.

6. Befestigungssystem nach einem der Ansprüche 1 bis 5, wobei der Adapter (15) mit der Maßgabe eingerichtet ist, dass er zumindest mit seinem unteren Teil (19) zwischen den beiden U-Schenkein (20) der U-förmigen Rohrbefestigungsschiene (16) einpassbar ist und zumindest einen Abschnitt (23) aufweist, der in diesem eingepassten Zustand einen U-Schenkel (20) übergreift bzw. hintergreift.

7. Befestigungssystem nach einem der Ansprüche 1 bis 6, wobei der Adapter (15) auswechselbar ist.

8. Befestigungssystem nach einem der Ansprüche 1 bis 7 mit zumindest einer U-förmigen Haltenadel (2), wobei die Rohrbefestigungsschiene (16) zumindest zwei benachbarte Fixierungsöffnungen (25) aufweist, deren gegenseitiger Abstand an den Abstand der beiden Nadelschenkel (12) der U-förmigen Haltenadel (2) angepasst ist, so dass die beiden Nadelschenkel (13) die Fixierungsöffnungen (25) nach einem Fixierungsvorgang durchgreifen.

## Claims

1. Mounting system including a device (1) for pushing retaining needles (2) into an underground (3) and including at least one U-shaped pipe mounting rail (16),
whereby the device (1) comprises a retaining needle magazine (4), a pressure stamp (5) as well as a stamp housing (6) with guiding shaft (7) and ejection opening (8),
whereby when operating the pressure stamp (5) guided in the stamp housing (6) a retaining needle (2) received in the guiding shaft (7) can be pushed out of the ejection opening (8) into the underground (3),
and whereby an adapter (15) is connected or is connectable in the area of the ejection opening (8) which adapter is formed subject to the proviso that it can be positively fitted into the U-shaped pipe mounting rail (16) to be fixed to the underground (3) using the retaining needle (2).

2. Mounting system according to claim 1, whereby the retaining needle magazine (4) and the guiding shaft (7) are adapted so as to receive the U-shaped retaining needles (2).

3. Mounting system according to one of claims 1 or 2, whereby the lower part (17) of the stamp housing (6) positively engages into the adapter (15).

4. Mounting system according to one of claims 1 to 2, whereby the adapter (15) is formed subject to the proviso that at least a part of the adapter (15) can be positively fitted between the two U-shanks (20) of the U-shaped pipe mounting rail (16).

5. Mounting system according to one of claims 1 to 4, whereby the adapter (15) comprises at least an extension (21), which can be fitted into a mounting recess (22) in a U-shank (20) of the U-shaped pipe mounting rail (16).

6. Mounting system according to one of claims 1 to 5, whereby the adapter (15) is fitted subject to the proviso that it can fitted, at least with its lower part (19), between the two U-shanks (20) of the U-shaped pipe mounting rail (16) and comprises at least one portion (23) which in the said fitted state engages over or behind one U-shank (20).

7. Mounting system according to one of claims 1 to 6, whereby the adapter (15) is replaceable.

8. Mounting system according to one of claims 1 to 7 including at least one U-shaped retaining needle (2), whereby the pipe mounting rail (16) comprises at least two adjacent fixing openings (25) the mutual distance of which is matched to the distance of the two needle shanks (12) of the U-shaped retaining needle (2) so that the two needle shanks 13) engage through the fixing openings (25) following a fixing operation.

## Revendications

1. Système de fixation comprenant un dispositif (1) pour enfoncer des aiguilles de fixation (2) dans un fond (3) et comprenant au moins un rail de fixation tubulaire (16) en forme de U, le dispositif (1) présentant un magasin d'aiguilles de fixation (4), un poinçon de compression (5) ainsi qu'une enveloppe de poinçon (6) avec un puits de guidage (7) et une ouverture d'expulsion (8), l'actionnement du poinçon de compression (5) amené dans l'enveloppe de poinçon (6) permettant à une aiguille de fixation (2) reçue dans le puits de guidage (7) d'être poussée de l'ouverture d'expulsion (8) dans le fond (3), et au niveau de l'ouverture d'expulsion (8), un adaptateur étant raccordé ou raccordable, lequel a la caractéristique d'être adaptable par complémentarité de forme dans le rail de fixation tubulaire (16) en forme de U à fixer sur le fond (3) avec l'aiguille de fixation (2).

2. Système de fixation selon la revendication 1, dans lequel le magasin d'aiguilles de fixation (4) et le puits de guidage (7) sont conçus pour recevoir des aiguilles de fixation (2) en forme de U.

3. Système de fixation selon l'une des revendications 1 ou 2, dans lequel la partie inférieure (17) de l'enveloppe de poinçon (6) se met en prise par complémentarité de forme dans l'adaptateur (15).

4. Système de fixation selon l'une des revendications 1 à 2, dans lequel l'adaptateur (15) a la caractéristique qu'au moins une partie de l'adaptateur (15) peut être intégrée par complémentarité de forme entre les deux branches du U (20) du rail de fixation tubulaire (16) en forme de U.

5. Système de fixation selon l'une des revendications 1 à 4, dans lequel l'adaptateur (15) présente au moins un prolongement (21) qui peut être intégré dans un évidement de fixation (22) dans une branche du U (20) du rail de fixation tubulaire (16) en forme de U.

6. Système de fixation selon l'une des revendications 1 à 5, dans lequel l'adaptateur (15) a la caractéristique qu'il peut être intégré avec au moins sa partie inférieure (19) entre les deux branches du U (20) du rail de fixation tubulaire (16) en forme de U et présente au moins une section (23) qui vient en prise par-dessus respectivement par derrière une branche du U (20) dans cet état intégré.

7. Système de fixation selon l'une des revendications 1 à 6, dans lequel l'adaptateur (15) est interchangeable.

8. Système de fixation selon l'une des revendications 1 à 7 comprenant au moins une aiguille de fixation en U (2) dans lequel le rail de fixation tubulaire (16) en forme de U présente au moins deux ouvertures de fixation (25) adjacentes dont l'écartement opposé est adapté à l'écartement des deux branches d'aiguille (12) de l'aiguille de fixation (2) en forme de U, de façon que les deux branches d'aiguille (13) traversent les ouvertures de fixation (25) après une procédure de fixation.
